# EUROPÄISCHE PATENTSCHRIFT

(11) **EP 2 720 638 B1**
(45) Veröffentlichungstag und Bekanntmachung des Hinweises auf die Patenterteilung: **11.02.2015**
(21) Anmeldenummer: 12713098.7
(22) Anmeldetag: 29.03.2012
(51) Int. Cl.: A61C 7/14, A61C 7/00

(54) **VERFAHREN ZUM HERSTELLEN EINER HILFSVORRICHTUNG FÜR DAS BEFESTIGEN WENIGSTENS EINES ANGRIFFSELEMENTS AUF EINEM ZAHN**
METHOD FOR PRODUCING AN AUXILIARY DEVICE FOR FASTENING AT LEAST ONE ENGAGEMENT ELEMENT ON A TOOTH
PROCÉDÉ DE FABRICATION D'UN DISPOSITIF AUXILIAIRE SERVANT À FIXER AU MOINS UN ÉLÉMENT DE PRISE SUR UNE DENT

(30) Priorität: 08.11.2011 DE 102011085915
(43) Veröffentlichungstag der Anmeldung: 23.04.2014
(73) Patentinhaber: OrthoSetup GmbH, 92318 Neumarkt in der Oberpfalz (DE)
(72) Erfinder: Hofmann, Andreas Michael, 92318 Neumarkt in der Oberpfalz (DE)
(74) Vertreter: Herzog, Markus
(86) Internationale Anmeldenummer: PCT/EP2012/055665
(87) Internationale Veröffentlichungsnummer: WO 2013/068131

(56) Entgegenhaltungen:
- US-A1- 2004 029 078
- US-A1- 2007 087 302

## Beschreibung

Die Erfindung betrifft ein Verfahren zum Herstellen einer Hilfsvorrichtung für das Befestigen wenigstens eines Angriffselements auf einem zugeordneten Zahn eines Patienten gemäß dem Oberbegriff des Anspruchs 1.

Die Verwendung von Zahnspangen zur Korrektur von Fehlstellungen von Zähnen ist allgemein bekannt. Neben den früher häufig verwendeten herausnehmbaren Zahnspangen werden heutzutage vermehrt fest installierte Zahnspangen verwendet. Diese umfassen in der Fachsprache als "Brackets" bezeichnete Angriffselemente, die auf den Zähnen befestigt werden, beispielsweise festgeklebt werden, und Angriffsstellen für Korrekturbewegungen der Zähne darstellen. Die für die Korrekturbewegungen erforderlichen Stellkräfte werden von Drahtbögen erzeugt, die mit den Brackets über an diesen ausgebildete und in der Fachsprache als "Slots" bezeichnete Eingriffselemente in Kraftübertragungsverbindung stehen. Üblicherweise werden im Abstand von mehreren Wochen nacheinander mehrere Drahtbögen mit den Brackets in Eingriff gebracht, um die Zahnfehlstellung nach und nach zu korrigieren.

Neben den Brackets, die unmittelbar auf der Zahnoberfläche befestigt werden, gibt es auch andere Arten von Angriffselementen, beispielsweise Brackets, die über ein so genanntes Band, auf das sie aufgeschweißt sind, am Zahn befestigt werden. Diese Art von Angriffselement wird nachstehend der Einfachheit halber als "Bracket-Band-Einheit" bezeichnet. Das üblicherweise aus Metall gefertigte Band umfasst den Zahn und muss durch Verformen individuell an den Zahn angepasst werden. Diese Art der Befestigung von Brackets an Zähnen kommt vorzugsweise bei den Backenzähnen zum Einsatz, kann aber grundsätzlich auch bei anderen Zähnen verwendet werden. Sie hat den Vorteil, dass über Brackets, die mittels eines Bandes am Zahn befestigt sind, üblicherweise größere Kräfte auf den Zahn übertragen werden können als über auf den Zahn aufgeklebte Brackets.

Es versteht sich, dass die Befestigung der Brackets genau an den für die Erreichung der Korrektur der Fehlstellung präzise vorbestimmten Positionen auf den Zahnoberflächen unabdingbare Voraussetzung für den Erfolg der kieferorthopädischen Behandlung der Zahnfehlstellung ist. Bereits kleine Fehler in der Platzierung führen zu einer falschen Endstellung der Zähne. In diesem Fall müssen entweder die Brackets neu platziert werden oder die Drahtbögen derart verformt werden, dass sie den Fehler in der Bracketpositionierung ausgleichen. Dabei birgt das Neuplatzieren der Brackets das Risiko, dass diese wiederum nicht optimal platziert werden. Außerdem werden die Zähne hin und her bewegt, was schlimmstenfalls zu einer Schwächung, wenn nicht gar Schädigung der Zahnwurzeln führen kann. Ebenso ist die manuelle Korrektur der Bogenbiegung nur schwer und mit sehr viel Erfahrung möglich, so dass auch hier die Gefahr besteht, dass ein Fehler durch einen anderen ersetzt wird.

Zur Erleichterung der vertikalen Positionierung der Brackets auf den Zahnoberflächen gibt es Tabellen für den vertikalen Abstand der Bracketslots relativ zur Inzisalkante bei Schneidezähnen bzw. zur Höckerspitze des Zahnes bei Eck- und Seitenzähnen. Ferner gibt es mehrarmige Hilfsvorrichtungen, die mit einem Arm in die Slots eingreifen und mit einem anderen Arm auf die Inzisalkante oder Höckerpsitze aufgelegt werden. Bedingt durch die geringe Auflagefläche der Inzisalkanten und Höckerspitzen ist diese Methode aber nicht präzise genug. Eine Ausführungsform einer derartigen Hilfsvorrichtung ist beispielsweise in der US 3,686,762 A offenbart.

An dieser Stelle sei nochmals darauf hingewiesen, dass sich die vorliegende Erfindung nicht nur mit der Befestigung von Brackets an Zahnoberflächen befasst, sondern ganz allgemein mit der Befestigung jedweder Art von Angriffselement, das zur Korrektur von Fehlstellungen von Zähnen an der Oberfläche der Zähne befestigt werden muss. Lediglich beispielhaft seien hier noch die in der Fachsprache als "Attachments" bezeichneten Angriffselemente erwähnt, die der Stellungskorrektur einiger weniger Zähne dienen und mit Drahtbogen und/oder Spanngummis zusammenwirken.

Ein gattungsgemäßes Verfahren ist aus der US-A-2004/0029078 bekannt. Bei dem bekannten Verfahren werden beim Rückübergang vom virtuellen Datenmodell zum Echtmodell die virtuell bestimmten Bracket-Positionsdaten gemäß einer ersten Alternative an eine Markierungseinheit übergeben, die auf Grundlage dieser Daten auf dem Echtmodell der Zähne, von dem ausgehend zu Beginn des Verfahrens das virtuelle Datenmodell der Zähne, beispielsweise durch Scannen, erstellt wurde, diese Positionen markiert, beispielsweise durch Aufmalen auf das schon bestehende Echtmodell, oder gemäß einer zweiten Alternative an einen Roboter übergeben, der dann auf Grundlage dieser Daten Brackets auf dem schon bestehende Echtmodell der Zähne anordnet, wobei über die Art der Befestigung nichts ausgesagt ist.

Zum Stand der Technik sei ferner auf die US-A-2007/0087302 und die US 5,011,405 verwiesen.

Aufgabe der vorliegenden Erfindung ist es, dem Zahnarzt/Kieferorthopäden eine Hilfsvorrichtung an die Hand zu geben, welche eine präzisere Positionierung der Angriffselemente auf der Oberfläche der Zähne ermöglicht.

Diese Aufgabe wird gemäß der Erfindung durch ein Verfahren zum Herstellen einer Hilfsvorrichtung für das Befestigen einer Mehrzahl von Angriffselementen auf einer zugeordneten Mehrzahl von Zähnen eines Patienten gelöst, welches die folgenden Schritte umfasst:
1a) Erstellen eines dreidimensionalen digitalen Modells der Ist-Stellung der Zähne,
1b) Transformieren des in Schritt 1a) erstellten Modells der Ist-Stellung der Zähne in ein dreidimensionales digitales Modell einer Soll-Stellung der Zähne,
1c) Abwandeln des in Schritt 1b) ermittelten dreidimensionalen digitalen Modells der Soll-Stellung der Zähne durch virtuelles Anordnen von dreidimensionalen digitalen Modellen der Angriffselemente an Soll-Positionen an dem in Schritt 1b) ermittelten Modell der Soll-Stellung der Zähne,
1d) Transformieren des in Schritt 1c) erhaltenen abgewandelten dreidimensionalen digitalen Modells der Soll-Stellung der Zähne in ein abgewandeltes dreidimensionales digitales Modell der Ist-Stellung der Zähne,
   wobei die in diesem Schritt vorgenommene Transformation die inverse Transformation zu der in Schritt 1b) vorgenommenen Transformation ist, und
   wobei entweder vor oder nach der in Schritt 1d) durchgeführten Transformation die die Angriffselemente repräsentierenden dreidimensionalen digitalen Modelle durch dreidimensionale digitale Modelle von Haltevorrichtungen ersetzt werden, welche mit den Zähnen verbunden sind und die Angriffselemente formschlüssig an den Soll-Positionen halten,
1e) Herstellen eines dreidimensionalen Echtmodells der Ist-Stellung der Zähne einschließlich der einstückig angeformten Haltevorrichtungen auf Grundlage des in Schritt 1d) erhaltenen abgewandelten dreidimensionalen digitalen Modells der Ist-Stellung der Zähne einschließlich der Haltevorrichtungen,
1f) Einsetzen der Angriffselemente in die Haltevorrichtungen des Echtmodells,
1g) Einbetten der in den Haltevorrichtungen aufgenommenen Angriffselemente sowie einer Mehrzahl von charakteristischen Flächenabschnitte des Echtmodells mittels einer aushärtbaren Formmasse,
1h) Aushärten der Formmasse und
1 i) Abnehmen der ausgehärteten Formmasse einschließlich der von dieser gehaltenen Angriffselemente als Hilfsvorrichtung zum Befestigen der Angriffselemente an den Zähnen von dem Echtmodell.

Ein Vorteil des erfindungsgemäßen Verfahrens besteht darin, dass die Angriffselemente zunächst virtuell auf der Oberfläche der Zähne angeordnet werden, so dass ihre Position erforderlichenfalls beliebig oft korrigiert werden kann, bis die optimale Positionierung erreicht worden ist, ohne dass hierfür die Anwesenheit des Patienten erforderlich ist. Ein weiterer Vorteil besteht darin, dass das erfindungsgemäße Verfahren so ausgelegt ist, dass nach dem Übergang vom digitalen Modell zum Echtmodell an diesem Echtmodell der Zähne Haltevorrichtungen zur Aufnahme der echten Angriffselemente einstückig angeformt sind. Die durch die Haltevorrichtungen automatisch perfekt positionierten Angriffselemente brauchen dann nur noch in die aushärtbare Formmasse eingebettet zu werden, welche ferner Justierflächenabschnitte der Zahnoberflächen abformt. Nach dem Aushärten der Formmasse kann man diese zusammen mit den von ihr gehaltenen Angriffselementen von dem Echtmodell der Zähne abnehmen, wobei die Angriffselemente aus den Haltevorrichtungen herausgehoben werden.

Die ausgehärtete Formmasse bildet so eine Hilfsvorrichtung für das Befestigen der Angriffselemente auf den Zähnen des Patienten.

Der Zahnarzt/Kieferorthopäde braucht somit nur noch die zur Anlage an den Zähnen vorgesehenen Oberflächen der Angriffselemente mit einem Befestigungsmedium zu versehen, beispielsweise einem Kleber, und die Angriffselemente mittels der Hilfsvorrichtung an den Zähnen des Patienten zur Anlage zu bringen. Aufgrund des Zusammenwirkens der Justierflächenabschnitte mit den Zähnen des Patienten werden die Angriffselemente dabei automatisch präzise positioniert. Nach dem Abschluss des Befestigens, beispielsweise nach dem Aushärten des Klebers, kann die Hilfsvorrichtung von den Angriffselementen gelöst werden, welche an den Zähnen des Patienten verbleiben. Zuletzt braucht der Zahnarzt/Kieferorthopäde bzw. dessen Fachhilfskraft dann nur noch den ersten Drahtbogen an den Angriffselementten zu befestigen, um mit der Korrektur der Fehlstellung der Zähne des Patienten zu beginnen.

Ist für die Korrektur der Fehlstellung der Zähne des Patienten der Einsatz von auf Bändern aufgeschweißten Brackets (Bracket-Band-Einheit) wünschenswert oder erforderlich, so kann auch hierfür eine erfindungsgemäße Hilfsvorrichtung verwendet werden. Allerdings müssen diese unabhängig von den unmittelbar auf der Zahnoberfläche befestigten Brackets an den ihnen zugeordneten Zähnen befestigt werden. Daher betrifft die Erfiindung auch ein Verfahren zum Herstellen einer Hilfsvorrichtung für das Befestigen eines einzelnen Angriffselements auf einem zugeordneten Zahn eines Patienten. In diesem Fall wird das einzelne Angriffselement beispielsweise von der Bracket-Band-Einheit gebildet. Zudem muss das Band nach dem Einsetzen des Brackets in die zugehörige Haltevorrichtung des Echtmodells der Ist-Stellung der Zähne an den zugeordneten Zahn angepasst werden. Anschließend wird nur das angepasste Band nebst dem auf ihm angeordneten Bracket in aushärtbare Formmasse eingebettet, wobei auch charakteristische Flächenabschnitte wenigstens eines benachbarten Zahns mit abgeformt werden, um nach dem Aushärten der Formmasse eine Hilfsvorrichtung zu erhalten, die eine präzise Positionierung der Bracket-Band-Einheit auf dem zugeordneten Zahn des Patienten zu ermöglichen.

Zu erwähnen ist ferner, dass die Haltevorrichtung zur Aufnahme der Bracket-Band-Einheit vorzugsweise nicht nur einen Halteabschnitt für das Bracket umfasst, sondern auch einen Halteabschnitt für das Band.

Ferner ist darauf hinzuweisen, dass das gleiche Echtmodell der Ist-Stellung der Zähne des Patienten sowohl für die Herstellung der Hilfsvorrichtung für das Befestigen der Bracket-Band-Einheit auf dem zugeordneten Zahn verwendet werden kann, sondern auch für die Herstellung der Hilfsvorrichtung für das Befestigen der unmittelbar auf die Zahnoberfläche aufzubringenden Brackets.

Besonders hervorzuheben ist die Tatsache, dass das erfindungsgemäße Verfahren sowohl bei verstibulär als auch bei lingual auf den Zahnoberflächen zu befestigenden Angriffselementen eingesetzt werden kann.

Das erfindungsgemäße Verfahren hat den Vorteil, dass sie die Stuhlzeit beim behandelnden Zahnarzt/Kieferorthopäden beträchtlich reduziert und damit zu einer Kostenersparnis führt. Darüber hinaus wird durch den Ausschluss von Fehlerquellen bei der Positionierung der Angriffselemente auf den Zahnoberflächen oder um den Zahn herum der Behandlungszeitraum auf ein unbedingt erforderliches Maß reduziert. Ferner können sowohl für die Herstellung des Echtmodells der Zähne als auch für die Herstellung der Hilfsvorrichtung aus der aushärtbaren Formmasse jeweils gängige und damit kostengünstig erhältliche Materialien eingesetzt werden, was niedrigere Gesamtkosten zur Folge hat.

In Weiterbildung der Erfindung kann vorgesehen sein, dass das dreidimensionale digitale Modell der Ist-Stellung der Zähne gemäß Schritt 1a) erstellt wird, indem man in einem ersten Unterschritt, beispielsweise durch Abdruck, ein Negativechtmodell der Ist-Stellung der Zähne erstellt, in einem zweiten Unterschritt auf Basis dieses Negativechtmodells, beispielsweise durch Abguss, ein Positivechtmodell der Ist-Stellung der Zähne erstellt, und in einem dritten Unterschritt durch dreidimensionales Scannen dieses Positivechtmodells das dreidimensionale digitale Modell der Ist-Stellung der Zähne erstellt. Dabei kann im ersten Unterschritt als Abdruckmaterial jedes gängige, auf dem Markt erhältliche und für kieferorthopädische Anwendungen zugelassene Abdruckmaterial verwendet werden. Beispielhaft seien hier Silikone, Alginate und Hydro-Kolloide genannt, wobei sich diese Aufzählung ausdrücklich nicht als abschließend versteht. Alle diese Materialien härten üblicherweise durch Zeitablauf aus. Ferner können als Abgussmaterialien für den zweiten Unterschritt Kunststoffe oder Gips genannt werden, wobei Gips durch Zeitablauf aushärtet, während bei Kunststoffen das Aushärten gegebenenfalls auch durch Bestrahlung mit UV-Licht durchgeführt oder zumindest unterstützt werden kann. Auch diese Aufzählung versteht sich ausdrücklich nicht als abschließend.

Alternativ ist es jedoch auch möglich, dass das dreidimensionale digitale Modell der Ist-Stellung der Zähne gemäß Schritt 1a) durch dreidimensionales Scannen der Zähne, beispielsweise mittels eines Handscanners, erstellt wird.

Das erfindungsgemäße Verfahren hat den Vorteil, dass zur Erstellung des Echtmodells der Ist-Stellung der Zähne auf bewährte Abbildungstechniken und gängige Materialien zurückgegriffen werden kann, und zudem als Scanner ein Standgerät eingesetzt werden kann. Dies wirkt sich vorteilhaft auf die Kosten und die Präzision des letztlich erhaltenen digitalen dreidimensionalen Modells der Ist-Stellung der Zähne aus.

In Weiterbildung des Verfahrens nach der Erfindung kann für Schritt 1e) vorgesehen sein, dass das dreidimensionale Echtmodell der Ist-Stellung der Zähne einschließlich der Haltevorrichtungen durch dreidimensionales Ausdrucken erstellt wird. Der Begriff "dreidimensionales Ausdrucken" bezeichnet ein in der Fachwelt auch unter "rapid prototyping" (wörtlich: "schneller Modellbau") bekannt gewordenes Urformverfahren, bei dem das dreidimensionale Echtmodell schichtweise aus formlosem oder formneutralem Material unter Nutzung physikalischer und/oder chemischer Effekte aufgebaut wird. Als Material kann beispielsweise schnell aushärtender Kunststoff verwendet werden, der in Form winziger Tröpfchen mit hoher Präzision auf ein Substrat aufgetragen wird. Es ist jedoch auch möglich, ein flüssiges und durch Bestrahlung, beispielsweise mittels eine Lasers, aushärtbares Kunstharz zu verwenden. Diese "rapid prototyping"-Verfahren sind aus dem Stand der Technik an sich bekannt und werden daher hier nicht näher erläutert werden.

In Weiterbildung des Verfahrens nach der Erfindung kann ferner vorgesehen sein, dass als Formmasse in Schritt 1g) ein herkömmliches Dentalabdruckmaterial verwendet wird. Beispielhaft seien hier wiederum Silikone, Alginate und Hydro-Kolloide genannt, wobei sich diese Aufzählung ausdrücklich als nicht abschließend versteht. Alle diese Materialien härten üblicherweise durch Zeitablauf aus. Sie haben zudem den Vorteil, dass sie einerseits so formstabil sind, dass sie die Angriffselemente bis zum Aushärten des die Angriffselemente am Zahn befestigenden Klebers formsschlüssig halten können, dass sie aber andererseits über eine ausreichende Elastizität verfügen, damit die ausgehärtete Formmasse nach dem Aushärten des Klebers ohne Weiteres von den Angriffselementen gelöst werden kann.

Um den Schritt 1g) darüber hinaus mit herkömmlichem Werkzeug durchführen zu können, wird darüber hinaus vorgeschlagen, dass die in den Haltevorrichtungen aufgenommenen Angriffselemente sowie die Mehrzahl von charakteristischen Flächenabschnitte des Echtmodells unter Verwendung einer herkömmlichen Übertragungsschiene in die Formmasse eingebettet werden.

In Weiterbildung der Erfindung kann der für das Befestigungsmedium, beispielsweise den Kleber, zum Befestigen der Angriffselemente an den Zähnen erforderliche Raum bei der Erstellung des abgewandelten dreidimensionalen digitalen Modells der Soll-Stellung der Zähne in Schritt 1 c) vorgesehen werden.

Ferner kann das erfindungsgemäße Verfahren sowohl zur Herstellung einer Hilfsvorrichtung zur vestibulären Befestigung der Angriffselemente als auch zur Herstellung einer Hilfsvorrichtung zur lingualen Befestigung der Angriffselemente genutzt werden. Ferner kann sie zur Behandlung von Fehlstellungen von Zähnen sowohl im Oberkiefer als auch im Unterkiefer eingesetzt werden.

Um sicherstellen zu können, dass sich am Ende der Korrektur eine insgesamt korrekte Zahnstellung ergibt, ist es vorteilhaft, wenn an allen Zähnen des Oberkiefers oder/und Unterkiefers vestibulär oder/und lingual jeweils ein Angriffselement vorgesehen ist. Grundsätzlich ist es jedoch auch denkbar, nur an einem Teil der Zähne des Oberkiefers oder/und Unterkiefers vestibulär oder/und lingual jeweils ein Angriffselement vorzusehen. Um einen guten Bissschluss zwischen den Zähnen von Oberkiefer und Unterkiefer gewährleisten zu können, wird vorgeschlagen, sowohl an Oberkiefer als auch an Unterkiefer vestibulär oder/und lingual Angriffselemente an den Zähnen vorzusehen.

Schließlich können die Angriffselemente Brackets einer an den Zähnen des Patienten fest zu montierenden Zahnspange sein. Grundsätzlich ist aber auch der Einsatz anderer Arten von Angriffselementen denkbar. Beispielshaft seien hier die in der Fachsprache als "Attachment" bezeichneten Angriffselemente genannt.

Die Erfindung wird im Folgenden an Hand der Zeichnung an zwei Ausführungsbeispielen näher erläutert werden. Es stellt dar:
- Figur 1: eine schematische Darstellung des Gebisses eines Patienten, wie es der Kieferorthopäde zu Beginn der Behandlung vorfindet (Ist-Stellung der Zähne);
- Figur 2: eine schematische Darstellung eines digitalen 3D-Modells der Ist-Stellung der Zähne;
- Figur 3: eine schematische Darstellung eines digitalen 3D-Modells der Soll-Stellung der Zähne;
- Figur 4: eine schematische Darstellung eines digitalen 3D-Modells der Soll-Stellung der Zähne einschließlich digitaler 3D-Modelle der Brackets;
- Figur 5: eine schematische Darstellung eines digitalen 3D-Modells der Ist-Stellung der Zähne einschließlich digitaler 3D-Modelle der Brackets;
- Figur 6: eine schematische Darstellung eines Echtmodells der Ist-Stellung der Zähne einschließlich Haltevorrichtungen zur Aufnahme der Brackets nach einem ersten erfindungsgemäßen Ausführungsbeispiel;
- Figur 7: eine schematische Darstellung des Echtmodells der Figur 6 mit in die Haltevorrichtungen eingesetzten Brackets;
- Figur 8: eine schematische Darstellung zur Erläuterung des Einbettens des Echtmodells der Figur 7 in aushärtbare Formmasse;
- Figur 9: eine schematische Seitenansicht einer erfindungsgemäß hergestellten Hilfsvorrichtung für das Befestigen von Brackets an den Zähnen eines Patienten;
- Figur 10: eine schematische Draufsicht auf die Hilfsvorrichtung der Figur 9;
- Figur 11: eine schematische Darstellung eines digitalen 3D-Modells der erfindungsgemäßen Hilfsvorrichtung nach einem nicht erfindungsgemäßen und lediglich dem besseren Verständnis dienenden zweiten Ausführungsbeispiel;
- Figur 12: eine schematische Darstellung eines Echtmodells der Hilfsvorrichtung der Figur 11;
- Figur 13: eine perspektivische Darstellung eines Gebissabschnitts mit einem Backenzahn, an dem eine Bracket-Band-Einheit befestigt ist, zur Erläuterung einer Abwandlung des Verfahrens nach dem ersten Ausführungsbeispiel;
- Figur 14: eine schematische Darstellung zur Erläuterung der Anpassung des Bandes der Bracket-Band-Einheit an die Form des Zahns;
- Figur 15: eine Ansicht ähnlich Figur 14, welche die an den Zahn angepasste Bracket-Band-Einheit zeigt; und
- Figur 16: eine perspektivische Darstellung einer Hilfsvorrichtung zur Befestigung einer Bracket-Band-Einheit an einem Zahn zur Erläuterung einer Abwandlung des Verfahrens nach dem zweiten, nicht erfindungsgemäßen Ausführungsbeispiel.

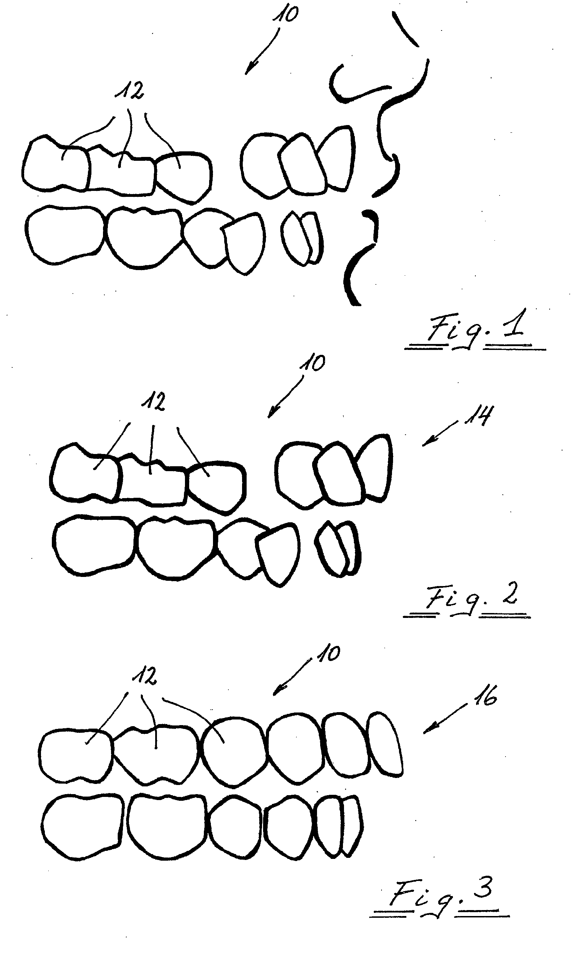

In Figur 1 ist die Ist-Stellung der Zähne 12 des Gebisses 10 eines Patienten dargestellt, dessen Nasen- und Mundpartie lediglich grob schematisch angedeutet sind.

Der erste Schritt des erfindungsgemäßen Verfahrens besteht darin, ein digitales 3D-Modell 14 dieser Ist-Stellung der Zähne 12 zu erstellen (siehe Figur 2).

Hierzu können nach einer ersten Verfahrensvariante herkömmliche Techniken eingesetzt werden. Beispielsweise kann man in einem ersten Unterschritt einen Abdruck der Ist-Stellung der Zähne 12 anfertigen, um so ein Negativechtmodell der Ist-Stellung der Zähne 12 zu erhalten, und in einem zweiten Unterschritt dieses Negativechtmodell abgießen, um ein Positivechtmodell der Ist-Stellung der Zähne 12 zu erhalten. In einem dritten Unterschritt kann man dann dieses Positivechtmodell scannen, um das gewünschte digitale 3D-Modell 14 der Ist-Stellung der Zähne zu erhalten. Da diese Techniken an sich bekannt sind, sollen sie hier nicht näher erläutert werden.

Gemäß einer alternativen zweiten Verfahrensvariante ist es jedoch auch möglich, dass das digitale 3D-Modell 14 der Ist-Stellung der Zähne 12 unmittelbar durch dreidimensionales Scannen des Gebisses 10 des Patienten zu erstellen, beispielsweise mittels eines Handscanners.

Der große Vorteil des erfindungsgemäßen Verfahrens besteht darin, dass bis zum Einsetzen der Spange einschließlich des Befestigens der Brackets auf den Zähnen 12 des Patienten alle weiteren Schritte vorgenommen werden können, ohne dass hierfür die Anwesenheit des Patienten erforderlich ist, wobei der Zahnarzt/Kieferorthopäde etliche der vorzunehmenden weiteren Schritte an Assistenzpersonal deligieren kann. Dies reduziert insbesondere die Stuhlzeit und damit die für die Behandlung anfallenden Kosten.

In einem zweiten Schritt erstellt der Zahnarzt/Kieferorthopäde auf Basis des im ersten Schritt erhaltenen digitalen 3D-Modells 14 der Ist-Stellung der Zähne 12 ein digitales 3D-Modell 16 der Soll-Stellung der Zähne 12 des Patienten, d.h. der Zahnstellung, wie sie durch die Behandlung an deren Ende erzielt werden soll (siehe Figur 3). Hierzu wird erforderlichenfalls jeder einzelne Zahn 12 im digitalen 3D-Modell translatorisch oder/und rotatorisch, gegebenenfalls in alle drei Raumrichtungen oder/und um alle drei Raumachsen, bewegt, bis er wunschgemäß positioniert ist.

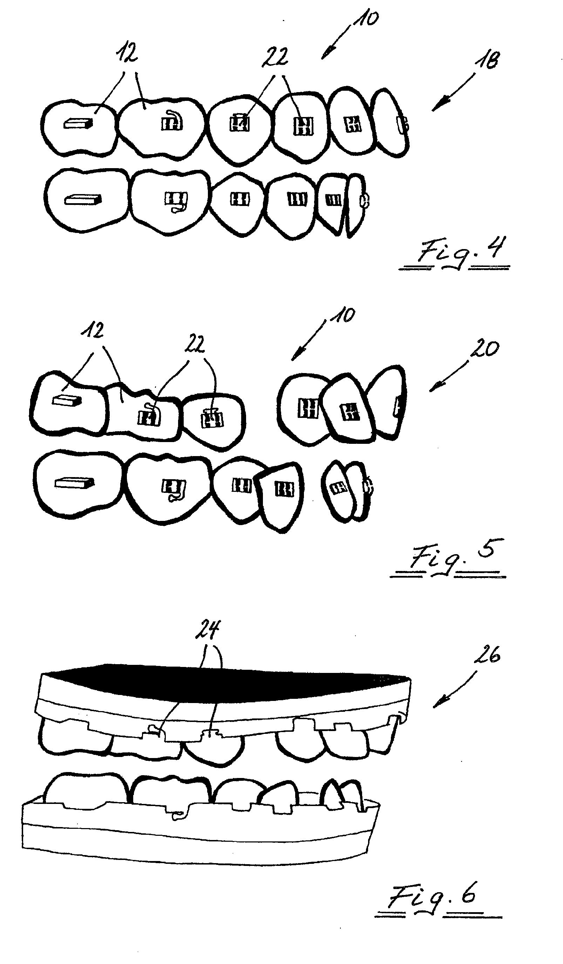

Anschließend wird in einem dritten Schritt das digitale 3D-Modell der Soll-Stellung der Zähne 12 modifiziert, indem man virtuell die Brackets 22 auf den Zähnen 12 des digitalen 3D-Modells anordnet. Das modifizierte digitale 3D-Modell der Soll-Stellung der Zähne 12 ist in Figur 4 mit 18 bezeichnet. Von spezieller Bedeutung ist, dass die korrekte Positionierung der Brackets in der Soll-Stellung der Zähne 12 besonders einfach ist, da die Positionen der Brackets 22 einem im Wesentlichen vollständig entspannten Drahtbogen entsprechen. Zudem kann die Position jedes einzelenen Brackets 22 am digitalen 3D-Modell 18 mehrfach korrigiert werden, ohne dass dies den Patienten beeinträchtigen würde.

Schließlich wird in einem vierten Schritt das modifizierte digitale 3D-Modell 18 der Soll-Stellung der Zähne 12 in ein modifiziertes digitales 3D-Modell 20 der Ist-Stellung der Zähne 12 zurückgerechnet, das in Figur 5 dargestellt ist. Dieses Zurückrechnen erfolgt, indem für jeden einzelnen Zahn 12 die im zweiten Schritt durchgeführte Transformationsbewegung wieder rückgängig gemacht wird. Von besonderer Bedeutung ist, dass sich die Brackets 22 in dem modifizierten digitalen 3D-Modell 20 der Ist-Stellung der Zähne 12 an genau den Positionen befinden, an denen sie auf den Zähnen 12 des Patienten befestigt werden müssen.

Die weiteren Schritte sind für das erfindungsgemäße Ausführungsbeispiel und das nicht erfindungsgemäße und lediglich dem besseren Verständnis dienende, zweite Ausführungsbeispiel verschieden.

In einem fünften Schritt des ersten Ausführungsbeispiels werden die Brackets 22 in dem modifizierten digitalen 3D-Modell 20 durch Haltevorrichtungen 24 ersetzt (siehe Figur 6), welche zur Aufnahme der Brackets 22 dienen.

In Abwandlung des ersten Ausführungsbeispiels ist es auch denkbar, dieses Ersetzen der Brackets 22 durch die Haltevorrichtungen 24 bereits nach der Positionierung der Brackets 22 in dem digitalen 3D-Modell 18 der Soll-Stellung der Zähne 12 und vor der Durchführung des vierten Schritts vorzunehmen.

In einem sechsten Schritt des ersten Ausführungsbeispiels kann das so erhaltene digitale 3D-Modell der Ist-Stellung der Zähne 12 einschließlich der Haltevorrichtungen 24 für Brackets 22 mittels eines 3D-Plotters ausgedruckt werden. Man erhält so ein Echtmodell 26 der Ist-Stellung der Zähne 12 einschließlich der Haltevorrichtungen 24 für Brackets 22 (siehe Figur 6).

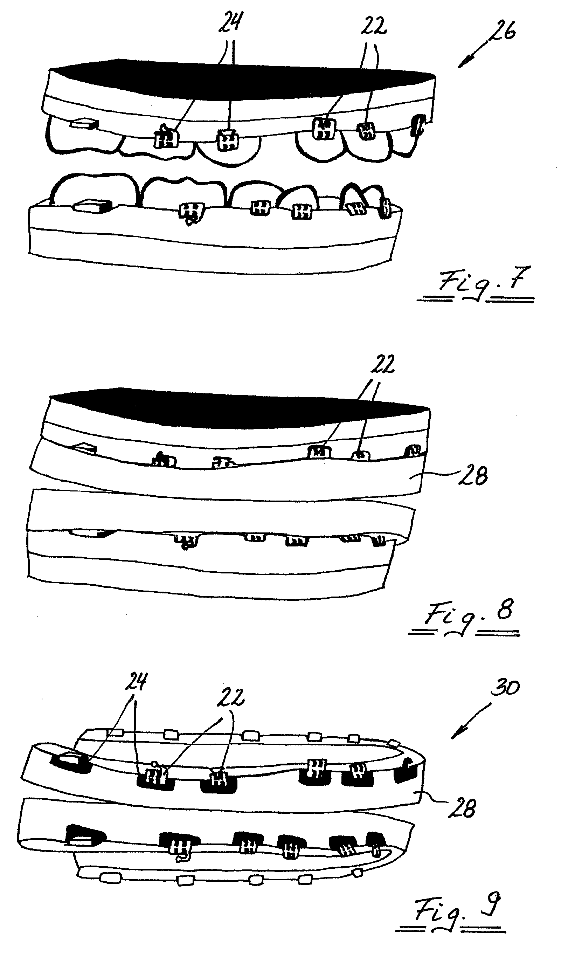

In die Haltevorrichtungen 24 dieses Echtmodell 26 kann man nun in einem siebten Schritt die realen Brackets 22 einsetzen (siehe Figur 7).

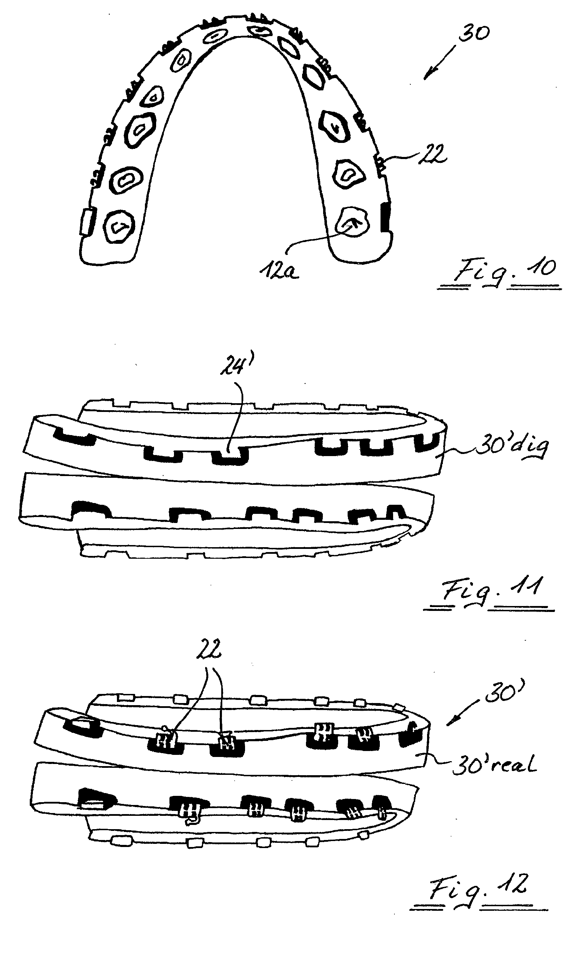

In einem achten Schritt des ersten Ausführungsbeispiels nutzt man eine herkömmliche mit aushärtbarer Formmasse 28 gefüllte Übertragungsschiene, wie sie beispielsweise bereits in dem ersten Schritt eingesetzt worden ist, um den Abdruck der Ist-Stellung der Zähne 12 des Patienten zu erstellen, um die Hilfsvorrichtung 30 für das Befestigen der Brackets 22 auf den Zähnen des Patienten zu erstellen (siehe Figur 8). Dabei hat man lediglich darauf zu achten, dass zum einen die Brackets 22 in die aushärtbare Masse 28 der Übertragungsschiene eingebettet sind und dass zum anderen charakteristische Flächen 12a der Zähne 12 des Patienten mit abgebildet werden (siehe Figur 10), die später für die korrekte Positionierung der Hilfsvorrichtung 30 auf den Zähnen erforderlich sind.

Mit dem Aushärten der Formmasse 28 und dem Abnehmen der ausgehärteten Formmasse 28 einschließlich der in sie eingebetteten Brackets 22 von dem Echtmodells 26 in einem neunten Schritt (siehe Figur 9) endet das erfindungsgemäße Verfahren zur Herstellen der Hilfsvorrichtung 30.

Zum Befestigen der Brackets 22 auf den Zähnen 12 des Patienten braucht der Zahnarzt/Kieferorthopäde im Idealfall nur noch die in der so hergestellten Hilfsvorrichtung 30 gehaltenen Brackets 22 mit einem geeigneten Klebstoff zu versehen, die Hilfsvorrichtung unter Ausnutzung der an ihr abgebildeten charakteristischen Flächen 12a der Zähne 12 auf den Zähnen 12 zu positionieren und zu warten bis der Klebstoff ausgehärtet ist und die Brackets 22 damit auf den Zähnen 12 des Patienten befestigt sind. Anschließend kann er die Hilfsvorrichtung 30 abnehmen, wobei Brackets 22 aus dieser gelöst werden.

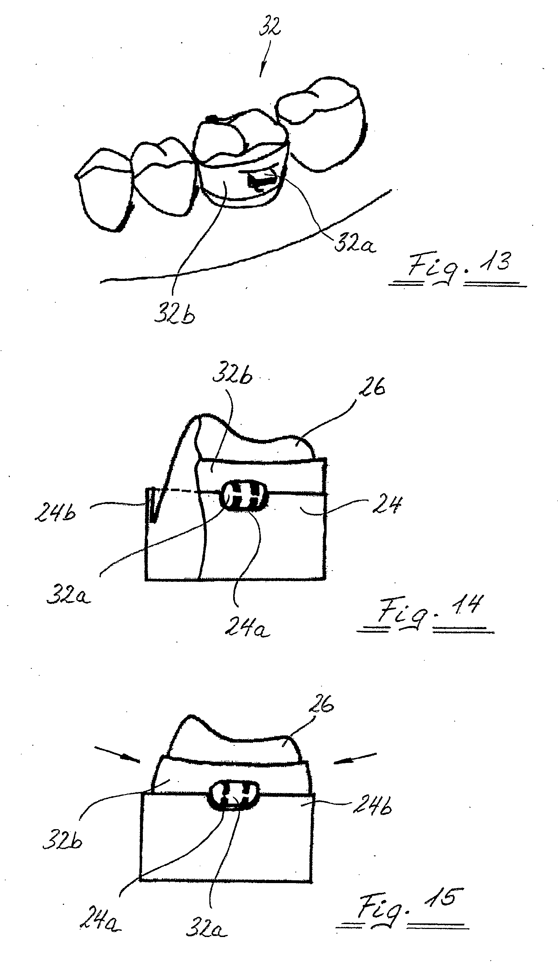

Das Verfahren nach dem ersten Ausführungsbeispiel kann, wie nachstehend mit Bezug auf die Figuren 13 bis 15 erläutert werden wird, auch für die Herstellung einer Hilfsvorrichtung für das Befestigen einer Bracket-Band-Einheit 32 auf einem Zahn, insbesondere einem Backenzahn, eines Patienten verwendet werden.

Eine Bracket-Band-Einheit 32 umfasst ein Bracket 32a, das üblicherweise ähnlich ausgebildet ist wie die zuvor angesprochenen Brackets 22, die unmittelbar auf der Zahnoberfläche befestigt werden. Im Unterschied zu diesen ist das Bracket 32a aber auf die Oberfläche eines Bandes 32b aufgeschweißt, das üblicherweise als geschlossener Ring und aus Metall gebildet ist. Nach dem Aufsetzen des Bandes auf den Zahn wird das Band mittels eines Werkzeugs derart verformt, dass es formschlüssig auf dem Zahn hält. Zur Minimierung der erforderlichen Verformung gibt es die Bänder herstellerseitig in verschiedenen Größen. Auch beim Einsatz von Bracket-Band-Einheiten 32 stellt sich das Problem der ordnungsgemäßen Platzierung der Brackets am Zahn.

Umfasste das Echtmodell 26 der Ist-Stellung der Zähne gemäß der ersten Ausführungsform des erfindungsgemäßen Verfahrens lediglich die Haltevorrichtungen 24 für die Brackets 22, so umfasst das Echtmodell 26 gemäß der Abwandlung der ersten Ausführungsform eine Haltevorrichtung 24 mit einem Halteabschnitt 24a für das Bracket 32a und einen Halteabschnitt 24b für das Band 32b der Bracket-Band-Einheit 32. Insbesondere der Halteabschnitt 24b ist dabei brüstungsartig ausgebildet, so dass sich eine um den Zahn, vorzugsweise vollständig, umlaufende Aufnahme (siehe den linken Bildausschnitt von Figur 14) für das Band 32b ergibt, aus der das Band 32b nach oben herausragt (siehe den rechten Bildausschnitt von Figur 14).

Nach dem Einsetzen der Bracket-Band-Einheit 32 in die Haltevorrichtung 24 wird der aus dem Halteabschnitt 24b herausragende Teil des Bandes 32b durch Verformen an die Gestalt des Zahnes angepasst, was in Figur 15 durch die beiden Pfeile angedeutet ist.

Die weiteren Schritte des Abformens des Echtmodells 26 einschließlich der in die Haltevorrichtung 24 eingesetzen Bracket-Band-Einheit 32 zur letztendlichen Herstellung der Hilfsvorrichtung kann anschließend genauso erfolgen, wie dies zuvor für die erste Ausführungsform beschrieben worden ist. Dabei sollten aber an benachbarten Zähnen etwa vorhandene Haltevorrichtungen nicht mit Brackets bestückt werden, um eine Hilfsvorrichtung zu erhalten, die ausschließlich dem Befestigen der Bracket-Band-Einheit 32 auf dem Zahn dient. Das Abformen von charakteristischen Flächen auch wenigstens eines benachbarten Zahns hat den Vorteil der präziseren Positionierung auf dem tatsächlichen Gebiss des Patienten.

Sollte es erforderlich sein, das Band 32b auch in dessen in den Figuren 14 und 15 vom Halteabschnitt 24b verdeckten Bereich zu verformen, um den Halt am Zahn sicherstellen zu können, so kann diese Verformung nach Abnahme der Hilfsvorrichtung noch unmittelbar am Patienten vorgenommen werden. Die korrekte Positionierung wird dabei durch die bereits verformten Abschnitte sichergestellt.

Der fünfte und die auf diesen folgenden weiteren Schritte des Verfahrens nach dem nicht erfindungsgemäßen zweiten Ausführungsbeispiel sind in den Figuren 11 und 12 dargestellt.

Im fünften Schritt des zweiten Ausführungsbeispiels wird auf Grundlage des modifizierten digitalen 3D-Modells 20 ein digitales 3D-Modell 30'dig der Hilfsvorrichtung 30' erstellt, welches zum einen Haltevorrichtungen 24' zur Aufnahme der Brackets 22 aufweist und zum anderen charakteristische Flächen 12a der Zähne 12 des Patienten abbildet, die später für die korrekte Positionierung der Hilfsvorrichtung 30' auf den Zähnen 12 erforderlich sind (siehe Figur 11).

In einem sechsten Schritt des zweiten Ausführungsbeispiels kann das so erhaltene digitale 3D-Modell 30'dig der Hilfsvorrichtung 30' mittels eines 3D-Plotters ausgedruckt werden. Man erhält so ein Echtmodell 30'real der Hilfsvorrichtung 30' (siehe Figur 12).

Mit dem Einsetzen der Brackets 22 in die Haltevorrichtungen 24' des Echtmodells 30'real der Hilfsvorrichtung 30' in einem siebten Schritt endet das Verfahren nach dem zweiten Ausführungsbeispiel.

Für das Befestigen der Brackets 22 an den Zähnen 12 des Patienten gilt das zum Verfahren nach dem ersten Ausführungsbeispiel Gesagte in identischer Weise.

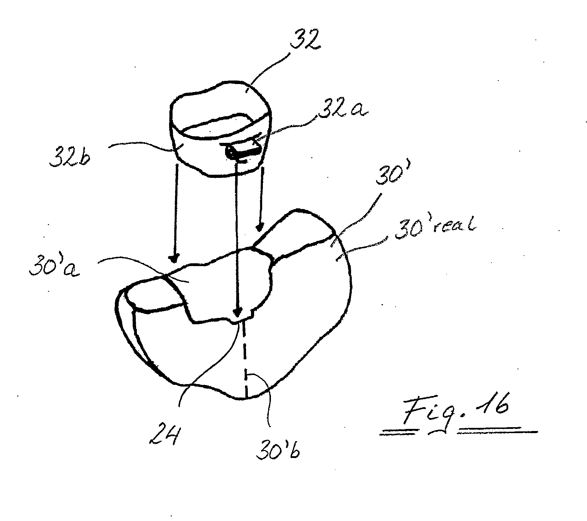

Nun soll mit Bezug auf Figur 16 noch eine Abwandlung der zweiten Ausführungsform für das Befestigen einer Bracket-Band-Einheit 32 auf einem Zahn erläutert werden. Gemäß dieser Abwandlung wird die Bracket-Band-Einheit 32 in eine zugehörige Ausnehmung 30'a des Echtmodells 30'real der Hilfsvorrichtung 30' eingesetzt, wobei das Bracket 32a in der Haltevorrichtung 24 aufgenommen wird. Hierauf wird die Bracket-Band-Einheit 32 zusammen mit der Hilfsvorrichtung 30' auf den Zahn des Patienten aufgebracht, und das Band 32b durch Verformen an die Gestalt des Zahns angepasst. Schließlich wird die Hilfsvorrichtung 30' vom Zahn abgenommen, wobei die ohnehin nicht mehr benötigte Hilfsvorrichtung 30' zum Lösen des Brackets 32a aus der Haltevorrichtung 24 zerstört wird. Um dies zu erleichtern, können an der Hilfsvorrichtung 30' Sollbruchstellen 30'b ausgebildet sein, von denen in Figur 16 eine durch eine gestrichelte Linie angedeutet ist.

Nachzutragen ist noch, dass, obgleich in der Beschreibung stets von einer bzw. der Hilfsvorrichtung die Rede ist, in den Figuren tatsächlich stets zwei Hilfsvorrichtungen dargestellt sind, nämlich eine Hilfsvorrichtung zum Befestigen der Brackets an den Zähnen des Oberkiefers und eine Hilfsvorrichtung zum Befestigen der Brackets an den Zähnen des Unterkiefers.

Nachzutragen ist ferner, dass lediglich aufgrund der einfacheren Darstellung die Erfindung am Beispiel einer Hilfsvorrichtung zum vestibulären Befestigen der Brackets an den Zähnen des Patienten erläutert worden ist. Sie ist jedoch gleichermaßen auch zur Herstellung einer Hilfsvorrichtung zum lingualen Befestigen von Brackets an den Zähnen des Patienten geeignet.

## Patentansprüche

1. Verfahren zum Herstellen einer Hilfsvorrichtung (30) für das Befestigen wenigstens eines Angriffselements (22) auf einem zugeordneten Zahn (12) eines Patienten, das Verfahren umfassend die Schritte:
1a) Erstellen eines dreidimensionalen digitalen Modells (14) der Ist-Stellung des wenigstens einen zugeordneten Zahns (12) und, falls genau ein Angriffselement auf einem zugeordneten Zahn zu befestigen ist, wenigstens eines diesem Zahn benachbarten Zahns,
1b) Transformieren des in Schritt 1a) erstellten Modells (14) der Ist-Stellung der Zähne in ein dreidimensionales digitales Modell (16) einer Soll-Stellung der Zähne,
1c) Abwandeln des in Schritt 1b) ermittelten dreidimensionalen digitalen Modells (16) der Soll-Stellung der Zähne durch virtuelles Anordnen eines dreidimensionalen digitalen Modells jedes Angriffselements (22) an einer zugehörigen Soll-Position an dem in Schritt 1b) ermittelten Modell (16) der Soll-Stellung der Zähne,
1d) Transformieren des in Schritt 1c) erhaltenen abgewandelten dreidimensionalen digitalen Modells (18) der Soll-Stellung der Zähne in ein abgewandeltes dreidimensionales digitales Modell (20) der Ist-Stellung der Zähne,
wobei die in diesem Schritt vorgenommene Transformation die inverse Transformation zu der in Schritt 1 b) vorgenommenen Transformation ist,
**dadurch gekennzeichnet, dass** entweder vor oder nach der in Schritt 1d) durchgeführten Transformation das wenigstens eine das wenigstens eine Angriffselement (22) repräsentierende dreidimensionale digitale Modell durch ein dreidimensionales digitales Modell einer entsprechenden Haltevorrichtung (24) ersetzt wird, welche mit dem zugehörigen Zahn (12) verbunden ist und das wenigstens eine Angriffselement (22) formschlüssig an der zugehörigen Soll-Position hält, und dass es die folgenden weiteren Schritte umfasst:
1e) Herstellen eines dreidimensionalen Echtmodells (26) der Ist-Stellung der Zähne (12) einschließlich der wenigstens einen, einstückig angeformten Haltevorrichtung (24) auf Grundlage des in Schritt 1d) erhaltenen abgewandelten dreidimensionalen digitalen Modells (20) der Ist-Stellung der Zähne einschließlich der wenigstens einen Haltevorrichtung (24),
1f) Einsetzen des wenigstens einen Angriffselements (22) in die wenigstens eine Haltevorrichtung (24) des Echtmodells (26),
1g) Einbetten des in der wenigstens einen Haltevorrichtung (24) aufgenommenen Angriffselements (22) sowie einer Mehrzahl von charakteristischen Flächenabschnitten (12a) des Echtmodells (26) mittels einer aushärtbaren Formmasse (28),
1h) Aushärten der Formmasse (28), und
1i) Abnehmen der ausgehärteten Formmasse (28) einschließlich des wenigstens einen von dieser gehaltenen Angriffselements (22) als Hilfsvorrichtung (30) zum Befestigen des wenigstens einen Angriffselements (22) an dem zugeordneten Zahn (12) von dem Echtmodell (26).

2. Verfahren nach Anspruch 1,
**dadurch gekennzeichnet, dass** das dreidimensionale digitale Modell (14) der Ist-Stellung der Zähne gemäß Schritt 1 a) erstellt wird, indem man in einem ersten Unterschritt, beispielsweise durch Abdruck, ein Negativechtmodell der Ist-Stellung der Zähne (12) erstellt, in einem zweiten Unterschritt auf Basis dieses Negativechtmodells, beispielsweise durch Abguss, ein Positivechtmodell der Ist-Stellung der Zähne (12) erstellt, und in einem dritten Unterschritt durch dreidimensionales Scannen dieses Positivechtmodells das dreidimensionale digitale Modell (14) der Ist-Stellung der Zähne (12) erstellt.

3. Verfahren nach Anspruch 1,
**dadurch gekennzeichnet, dass** das dreidimensionale digitale Modell (14) der Ist-Stellung der Zähne (12) gemäß Schritt 1a) durch dreidimensionales Scannen der Zähne (12), beispielsweise mittels eines Handscanners, erstellt wird.

4. Verfahren nach einem der Ansprüche 1 bis 3,
**dadurch gekennzeichnet, dass** das dreidimensionale Echtmodell (26) der Ist-Stellung der Zähne (12) einschließlich der Haltevorrichtungen (14) in Schritt 1e) durch dreidimensionales Ausdrucken erstellt wird.

5. Verfahren nach einem der Ansprüche 1 bis 4,
**dadurch gekennzeichnet, dass** als Formmasse (28) in Schritt 1g) ein herkömmliches Dentalabdruckmaterial verwendet wird.

6. Verfahren nach einem der Ansprüche 1 bis 4,
**dadurch gekennzeichnet, dass** das wenigstens eine in der zugehörigen Haltevorrichtung (24) aufgenommene Angriffselement (22) sowie die Mehrzahl von charakteristischen Flächenabschnitte (12a) des Echtmodells in Schritt 1g) unter Verwendung einer herkömmlichen Übertragungsschiene in die Formmasse (28) eingebettet werden.

7. Verfahren nach einem der Ansprüche 1 bis 6,
**dadurch gekennzeichnet, dass** der für das Befestigungsmedium, beispielsweise den Kleber, zum Befestigen des wenigstens einen Angriffselements (22) an dem zugeordneten Zahn erforderliche Raum bei der Erstellung des abgewandelten dreidimensionalen digitalen Modells (18) der Soll-Stellung der Zähne (12) in Schritt 1c) bzw. des dreidimensionalen digitalen Modells (30'dig) der Hilfsvorrichtung (30') in Schritt 1e) berücksichtigt wird.

8. Verfahren nach einem der Ansprüche 1 bis 7,
**dadurch gekennzeichnet, dass** es sowohl zur Herstellung einer Hilfsvorrichtung (30; 30') zur verstibulären Befestigung der Angriffselemente (22) als auch zur Herstellung einer Hilfsvorrichtung zur lingualen Befestigung des wenigstens einen Angriffselements (22) nutzbar ist.

9. Verfahren nach einem der Ansprüche 1 bis 8,
**dadurch gekennzeichnet, dass** das wenigstens eine Angriffselement (22) ein Bracket einer an den Zähnen (12) des Patienten fest zu montierenden Zahnspange ist, gewünschtenfalls ein auf einem Band befestigtes Bracket.

## Claims

1. Method for producing an auxiliary device (30) for fastening at least one attachment element (22) to an assigned tooth (12) of a patient, the method comprising the steps of:
1a) creating a three-dimensional digital model (14) of the actual position of the at least one assigned tooth (12) and, if precisely one attachment element is to be fastened to an assigned tooth, of at least one tooth adjacent to said tooth,
1b) transforming the model (14), created in step 1a), of the actual position of the teeth into a three-dimensional digital model (16) of a desired position of the teeth,
1c) modifying the three-dimensional digital model (16), determined in step 1b), of the desired position of the teeth by virtually arranging a three-dimensional digital model of each attachment element (22) in a corresponding desired position on the model (16), determined in step 1b), of the desired position of the teeth,
1d) transforming the modified three-dimensional digital model (18), obtained in step 1c), of the desired position of the teeth into a modified three-dimensional digital model (20) of the actual position of the teeth, the transformation undertaken in this step being the inverse transformation to the transformation undertaken in step 1b),
**characterised in that** either before or after the transformation carried out in step 1d), the at least one three-dimensional digital model representing the at least one attachment element (22) is replaced with a three-dimensional digital model of a corresponding holding device (24), which is connected to the corresponding tooth (12) and holds the at least one attachment element (22) in the corresponding desired position in an interlocking manner, and **in that** it comprises the following additional steps:
1e) producing a three-dimensional real model (26) of the actual position of the teeth (12) including the at least one, integrally formed holding device (24) on the basis of the modified three-dimensional digital model (20), obtained in step 1d), of the actual position of the teeth including the at least one holding device (24), 1f) inserting the at least one attachment element (22) in the at least one holding device (24) of the real model (26),
1g) embedding the attachment element (22) received in the at least one holding device (24) and a plurality of characteristic planar portions (12a) of the real model (26) by means of a curable moulding compound (28),
1h) curing the moulding compound (28), and
1i) removing the cured moulding compound (28) including the at least one attachment element (22) held thereby as an auxiliary device (30) for fastening the at least one attachment element (22) to the assigned tooth (12) from the real model (26).

2. Method according to claim 1, **characterised in that** the three-dimensional digital model (14) of the actual position of the teeth is created according to step 1a) by creating, in a first substep, for example by impression, a negative real model of the actual position of the teeth (12), by creating, in a second substep, on the basis on this negative real model, for example by casting, a positive real model of the actual position of the teeth (12), and by creating, in a third substep, by three-dimensionally scanning this positive real model, the three-dimensional digital model (14) of the actual position of the teeth (12).

3. Method according to claim 1, **characterised in that** the three-dimensional digital model (14) of the actual position of the teeth (12) is created according to step 1a) by three-dimensionally scanning the teeth (12), for example by means of a hand-held scanner.

4. Method according to any of claims 1 to 3, **characterised in that** the three-dimensional real model (26) of the actual position of the teeth (12) including the holding devices (14) is created in step 1e) by three-dimensional printing.

5. Method according to any of claims 1 to 4, **characterised in that** a conventional dental impression material is used as a casting compound (28) in step 1g).

6. Method according to any of claims 1 to 4, **characterised in that** the at least one attachment element (22) received in the corresponding holding device (24) and the plurality of characteristic planar portions (12a) of the real model are embedded in the casting compound (28) in step 1g) using a conventional transfer tray.

7. Method according to any of claims 1 to 6, **characterised in that** the space required for the fastening medium, for example the adhesive, for fastening the at least one attachment element (22) to the assigned tooth is taken into consideration when creating the modified three-dimensional digital model (18) of the desired position of the teeth (12) in step 1c) and the three-dimensional digital model (30'dig) of the auxiliary device (30') in step 1e).

8. Method according to any of claims 1 to 7, **characterised in that** it can be used both for producing an auxiliary device (30; 30') for the vestibular fastening of the attachment elements (22) and for producing an auxiliary device for the lingual fastening of the at least one attachment element (22).

9. Method according to any of claims 1 to 8, **characterised in that** the at least one attachment element (22) is a bracket of a brace to be rigidly mounted on the teeth (12) of the patient, if desired a bracket fastened to a strip.

## Revendications

1. Procédé de fabrication d'un dispositif auxiliaire (30) pour la fixation d'au moins un élément de prise (22) sur une dent associée (12) d'un patient, le procédé comprenant les étapes suivantes:
1a) création d'un modèle numérique tridimensionnel (14) de la position réelle de ladite au moins une dent associée (12) et, dans le cas où il faut fixer exactement un élément de prise sur une dent associée, d'au moins une dent voisine de cette dent,
1b) transformation du modèle (14) créé à l'étape 1a) de la position réelle des dents en un modèle numérique tridimensionnel (16) d'une position théorique des dents,
1c) modification du modèle numérique tridimensionnel (16) déterminé à l'étape 1b) de la position théorique des dents par agencement virtuel d'un modèle numérique tridimensionnel de chaque élément de prise (22) sur une position théorique correspondante sur le modèle (16) déterminé à l'étape 1b) de la position théorique des dents,
1d) transformation du modèle numérique tridimensionnel modifié (18) obtenu à l'étape 1c) de la position théorique des dents en un modèle numérique tridimensionnel modifié (20) de la position réelle des dents,
dans lequel la transformation opérée dans cette étape est la transformation inverse de la transformation opérée à l'étape 1b),
**caractérisé en ce que**, soit avant soit après la transformation opérée à l'étape 1d), on remplace ledit au moins un modèle numérique tridimensionnel représentant ledit au moins un élément de prise (22) par un modèle numérique tridimensionnel d'un dispositif de maintien correspondant (24), qui est relié à la dent correspondante (12) et qui maintient ledit au moins un élément de prise (22) par emboîtement sur la position théorique correspondante, et **en ce qu'**il comprend les autres étapes suivantes:
1e) fabrication d'un modèle réel tridimensionnel (26) de la position réelle des dents (12) y compris dudit au moins un dispositif de maintien (24) façonné d'une pièce sur la base du modèle numérique tridimensionnel modifié (20) obtenu à l'étape 1d) de la position réelle des dents y compris dudit au moins un dispositif de maintien (24),
1f) introduction dudit au moins un élément de prise (22) dans ledit au moins un dispositif de maintien (24) du modèle réel (26),
1g) enrobage de l'élément de prise (22) contenu dans ledit au moins un dispositif de maintien (24) ainsi que d'une multiplicité de parties de surface caractéristiques (12a) du modèle réel (26) au moyen d'une masse de moulage durcissable (28),
1h) durcissement de la masse de moulage (28), et
1i) enlèvement de la masse de moulage durcie (28) y compris dudit au moins un élément de prise (22) maintenu par celle-ci comme dispositif auxiliaire (30) pour la fixation dudit au moins un élément de prise (22) sur la dent associée (12), hors du modèle réel (26).

2. Procédé selon la revendication 1, **caractérisé en ce que** l'on crée le modèle numérique tridimensionnel (14) de la position réelle des dents selon l'étape 1a) par le fait que dans une première sous-étape, on réalise, par exemple par une prise d'empreinte, un modèle réel négatif de la position réelle des dents (12), que dans une deuxième sous-étape, on réalise sur la base de ce modèle réel négatif, par exemple par moulage, un modèle réel positif de la position réelle des dents (12), et que dans une troisième sous-étape, on réalise, par balayage tridimensionnel de ce modèle réel positif, le modèle numérique tridimensionnel (14) de la position réelle des dents (12).

3. Procédé selon la revendication 1, **caractérisé en ce que** l'on réalise le modèle numérique tridimensionnel (14) de la position réelle des dents (12) selon l'étape 1a) par un balayage tridimensionnel des dents (12), par exemple au moyen d'un scanneur manuel.

4. Procédé selon l'une quelconque des revendications 1 à 3, **caractérisé en ce que** l'on réalise le modèle réel tridimensionnel (26) de la position réelle des dents (12) y compris des dispositifs de maintien (14) à l'étape 1e) au moyen d'une empreinte tridimensionnelle.

5. Procédé selon l'une quelconque des revendications 1 à 4, **caractérisé en ce que** l'on utilise comme masse de moulage (28) à l'étape 1g) un matériau de prise d'empreintes dentaires conventionnel.

6. Procédé selon l'une quelconque des revendications 1 à 4, **caractérisé en ce que** l'on enrobe dans la masse de moulage (28) ledit au moins un élément de prise (22) contenu dans le dispositif de maintien correspondant (24) ainsi que la multiplicité de parties de surface caractéristiques (12a) du modèle réel à l'étape 1g) en utilisant un rail de transfert conventionnel.

7. Procédé selon l'une quelconque des revendications 1 à 6, **caractérisé en ce que** l'on tient compte de l'espace nécessaire pour le moyen de fixation, par exemple la colle, pour la fixation dudit au moins un élément de prise (22) sur la dent associée, lors de la réalisation du modèle numérique tridimensionnel modifié (18) de la position théorique des dents (12) à l'étape 1c) ou du modèle numérique tridimensionnel (30'num) du dispositif auxiliaire (30') à l'étape 1e).

8. Procédé selon l'une quelconque des revendications 1 à 7, **caractérisé en ce qu'**il est utilisable aussi bien pour la fabrication d'un dispositif auxiliaire (30; 30') pour la fixation vestibulaire des éléments de prise (22) que pour la fabrication d'un dispositif auxiliaire pour la fixation linguale dudit au moins un élément de prise (22).

9. Procédé selon l'une quelconque des revendications 1 à 8, **caractérisé en ce que** ledit au moins un élément de prise (22) est une console d'un appareil dentaire à monter de façon fixe sur les dents (12) du patient, si on le souhaite une console fixée sur une bande.
